# FASCICULE DE BREVET EUROPEEN

(11) **EP 3 164 592 B1**
(45) Date de publication et mention de la délivrance du brevet: **29.08.2018**
(21) Numéro de dépôt: 15728035.5
(22) Date de dépôt: 15.06.2015
(51) Int. Cl.: F02M 63/00, F02M 63/02, F16K 15/18, F16K 31/40

(54) **ELECTROVANNE DE REGULATION DE PRESSION**
ELECTROMAGNETISCHES DRUCKREGELVENTIL
ELECTROMAGNETIC PRESSURE REGULATING VALVE

(30) Priorité: 01.07.2014 FR 1456266
(43) Date de publication de la demande: 10.05.2017
(73) Titulaire: Delphi International Operations Luxembourg S.à r.l., 4940 Bascharage (LU)
(72) Inventeur: MARECHAL, Michel, F-41150 Choussy-sur-Cisse (FR); SAUVAGE, Frédéric, F-45190 Beaugency (FR); MENAND, Alexis, F-41000 Blois (FR); AMAND, Alain, F-49000 Angers (FR); CEZON, Nicolas, F-45140 Ingres (FR); VOIGT, Peter, L-4970 Bettange-sur-Mess (LU)
(74) Mandataire: Delphi France SAS
(86) Numéro de dépôt international: PCT/EP2015/063355
(87) Numéro de publication internationale: WO 2016/000943

(56) Documents cités:
- DE-A1-102011 013 702
- JP-A- 2014 001 680

## Description

### DOMAINE TECHNIQUE

L'invention est relative à une électrovanne régulatrice de la pression dans la rampe commune d'un système d'injection, notamment pour moteur à combustion interne.

### ARRIERE-PLAN TECHNOLOGIQUE DE L'INVENTION

Un système d'injection diesel doit être opérationnel sur une plage de pression large de plusieurs milliers de bars et, une large plage de température couvrant l'hiver du nord et l'été du sud. Le système est muni d'une électrovanne pilotée qui régule, à quelques bars près, la pression dans la rampe commune du système cependant, des ondes de pressions se propagent dans le carburant et peuvent perturber le bon fonctionnement de cette électrovanne aussi, celle-ci est-elle pourvue de moyens d'amortissement de ces ondes, notamment des canaux de recirculation d'une partie du carburant entre la sortie de la rampe commune et le noyau magnétique de l'électrovanne (voir document JP 2014-1680A). Cet amortissement n'opère hélas que sur une partie restreinte de la plage de pression et en dehors de cette partie, des perturbations peuvent apparaître empêchant un fonctionnement optimal de l'électrovanne et du système.

### RESUME DE L'INVENTION

La présente invention se propose de résoudre au moins partiellement ces problèmes en proposant une électrovanne prévue pour réguler la pression dans un système d'injection de carburant sous pression. L'électrovanne comprend un corps dans lequel est agencé une aiguille coulissante entre une position fermée et un position ouverte, l'aiguille étant sollicitée par un électroaimant comprenant une bobine solidaire du corps et un noyau magnétique axialement mobile entre une première position dans laquelle il sollicite l'aiguille en position fermée et, une seconde position dans laquelle l'aiguille est libre de se déplacer en position ouverte. Le noyau est pourvu d'une cavité en communication de fluide, via un canal interne, avec un lamage du corps dans lequel émerge l'aiguille et dans lequel, en utilisation, arrive du carburant.

Le noyau est de plus pourvu d'un moyen de restriction de ladite communication de fluide adapté à amortir, en utilisation, des ondes de pressions se propageant dans le carburant et à empêcher lesdites ondes de déplacer le noyau.

Le moyen de restriction est un dispositif agencé de sorte à naturellement obturer la communication de fluide, ledit dispositif fermant en utilisation ladite communication lorsqu'une onde de pression se propageant dans le carburant tente de déplacer le noyau vers la seconde position.

Selon un mode de réalisation, le dispositif est un clapet anti-retour comprenant une bille placée dans le canal et un siège de clapet contre lequel la bille peut se placer et ainsi obturer le canal.

Selon un autre mode de réalisation le dispositif comprend un membre élastique qui, en utilisation, obture le canal lorsque le noyau est poussé par une onde de pression vers la seconde position, empêchant ainsi ledit déplacement, le membre élastique ouvrant le canal en ployant sous l'influence du déplacement du noyau lorsque celui-ci se déplace vers la première position.

Plus particulièrement, le membre élastique est une membrane fixée au fond de la cavité.

Selon encore un autre mode de réalisation, le membre élastique est un diaphragme comprenant des bras souples dont une extrémité est fixée au fond de la cavité et l'autre extrémité mobile se place sur la sortie du canal. Selon une alternative, l'extrémité mobile du diaphragme n'obstrue que partiellement le canal, de sorte que du carburant retenu dans la cavité peut en sortir via un mince flux de carburant.

### DESCRIPTION DES FIGURES

Un mode de réalisation de l'invention est maintenant décrit par l'intermédiaire des figures suivantes.
La figure 1 est une coupe axiale d'une électrovanne de régulation de pression connue de l'art antérieur.
Les figures 2, 3, 4 et 5 sont des détails d'une électrovanne selon trois modes de réalisation de l'invention.
Les figures 6 et 7 représentent un diaphragme anti-retour tels qu'utilisé dans l'électrovanne de la figure 5.

### DESCRIPTION DES MODES DE REALISATION PRÉFÉRÉS

Dans un système d'injection 10 diesel, il est connu d'agencer en bout de la rampe commune 12 à plusieurs injecteurs, une électrovanne 14 pilotée de sorte à réguler la pression du carburant dans la rampe 12. L'application choisie pour illustrer l'invention est partie à un système diesel cependant, l'objet de l'invention est indépendant du type de carburant et peut être utilisé dans le cadre d'un système d'injection pour essence ou tout autre.

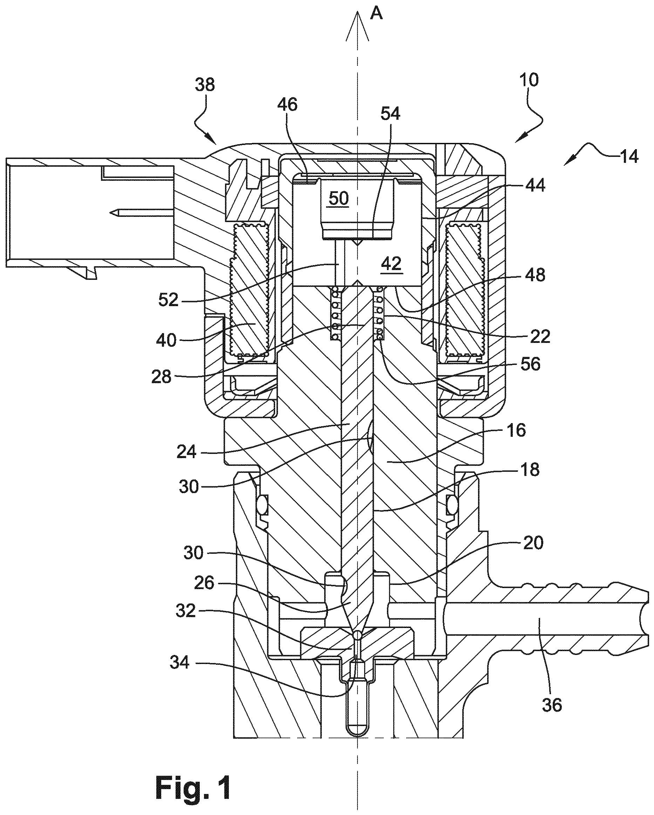

Une électrovanne 14 connue de l'art antérieur est maintenant décrite en référence à la figure 1 et en utilisant de manière non limitative et pour simple clarté de la description l'orientation de haut en bas de la figure.

L'électrovanne 14 s'étend selon un axe principal A et comprend un corps 16 adapté à s'agencer de manière complémentaire en bout de la rampe 12. De multiples alternatives de cet agencement existent sans qu'elles soient détaillées ici.

Le corps 16 est pourvu d'un alésage axial 18 débouchant aux extrémités du corps dans un lamage bas 20 et dans un lamage haut 22 et, dans cet alésage 18 est agencée coulissante une aiguille 24 dont la pointe 26 émerge dans le lamage bas 20 et, à l'opposé, la tête 28 émerge dans le lamage haut 22. Elle est elle-même pourvue d'une gorge s'étendant en hélice 30 de la pointe 26 à la tête 28.

Ainsi agencée, l'aiguille 24 peut se déplacer dans l'alésage 18 entre une position fermée PF et une position entièrement ouverte PO. En position fermée PF, la pointe 26 de l'aiguille 24 est en butée contre un siège 32 de vanne et obture un orifice de sortie 34 maintenant le carburant à l'intérieur de la rampe commune 12 et, en position ouverte PO, la pointe 26 se retire à distance du siège 32 et ainsi, l'orifice 34 est ouvert et le carburant sous pression peut sortir de la rampe 12 pour s'écouler dans un canal de retour 36.

L'électrovanne de la figure 1 présente un agencement spécifique du siège 32 placé dans un autre lamage du corps 16 avec une petite bille placée entre le siège 32 et la pointe 26 de l'aiguille 24 et, un canal de retour 36 agencé latéralement. Il existe de très nombreuses alternatives à cet agencement sans que ceux-ci soient non plus détaillés plus avant.

A l'extrémité opposée au siège 32, en haut de la figure, l'électrovanne 14 est pourvue d'un électroaimant 38 fixé en haut du corps 18. L'électroaimant comprend une bobine 40 reliée à un contrôleur électronique, non représenté et, un noyau magnétique 42 mobile coopérant avec la tête 28 de l'aiguille 24. La bobine 40, solidaire du corps 16, est de forme annulaire et entoure le haut du corps 16. Elle définit en son centre un logement axial 44 dans lequel le noyau magnétique 42 est agencé à l'aplomb du corps 16 et de l'aiguille 24. Le noyau magnétique 42 est de forme cylindrique, s'étendant axialement A entre une face supérieure 46 et une face inférieure 48 et, il est pourvu d'une cavité 50 en forme de lamage cylindrique, s'ouvrant dans la face supérieure 46 et, d'un canal 52 reliant le fond 54 de la cavité 50 à la face inférieure 48 du noyau 42. Un seul canal 52 est ici décrit et représenté cependant des alternatives comprenant plusieurs canaux 52 existent.

Dans le logement 44, le noyau magnétique 42 peut coulisser entre une position basse PB, adoptée lorsque la bobine 40 est électriquement alimentée et, une position haute PH, adoptée lorsque la bobine 40 n'est pas alimentée. Entre le fond du lamage haut 22 et la face inférieure 48 du noyau 42, est comprimé un ressort 56 qui sollicite en permanence le noyau 42 vers la position haute PH.

Le fonctionnement de l'électrovanne 14 est maintenant décrit.

Tant que la pression du carburant dans la rampe commune 12 est inférieure à une limite prédéterminée mémorisée dans le contrôleur électronique, la bobine 40 est alimentée sollicitant le noyau 42 en position basse PB. La face inférieure 48 du noyau appuie sur la tête 28 de l'aiguille 24 et maintient celle-ci en position fermée PF. Lorsque la pression dans la rampe commune 12 atteint ladite limite prédéterminée, l'alimentation de la bobine 40 est arrêtée et le noyau 42 se déplace en position haute PH, sollicité à la fois par le ressort 56 et également par l'aiguille 24 qui elle est repoussée en position ouverte PO par le carburant sous pression qui sort par l'orifice de sortie 34. La plus grande partie du carburant est alors évacuée par le canal de retour 36 et, une partie moindre passe entre l'aiguille 24 et l'alésage 18, notamment en suivant la gorge en hélice 30. Ce carburant remonte jusqu'à atteindre le lamage haut 22 puis le canal 52 interne au noyau 42 et enfin la cavité 50. Lorsque la bobine 40 est à nouveau alimentée, le noyau 42 retourne en position basse PB et la partie du carburant qui est remontée vers le noyau peut circuler dans le sens inverse vers canal de retour 36.

En utilisation, la pression du carburant doit être régulée dans une plage de +/-15 bars alors que, la pression nominale varie entre environ 200 bars et environ 2500 bars, le débit de carburant varie entre environ 5 L/h et environ 120 L/h et que, la température du carburant varie entre -30°C et entre +110°C. Le canal 52 est dimensionné de sorte qu'à basse température le temps de réponse de l'électrovanne soit inférieur à une demie seconde. Cependant la partie du carburant circulant vers le noyau véhicule des ondes de pression qui perturbent les mouvements commandés du noyau 42.

Dans le but d'atténuer les effets de ces ondes un clapet anti-retour est agencé dans le noyau.

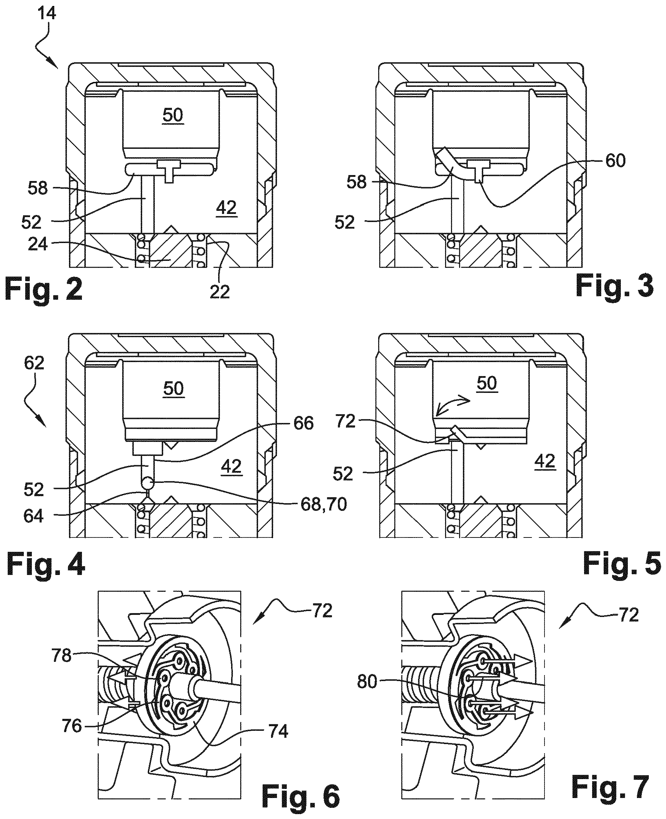

Un premier mode de réalisation est maintenant décrit en référence aux figures 2 et 3.

Au fond 54 de la cavité 50 est agencée une membrane élastique 58 qui, au repos épouse le fond 54 de la cavité 50 et obstrue le canal 52. L'exemple choisi montre une membrane 58 fixée en son centre au fond 54 de la cavité 50 par un pion 60 cependant, le mode de fixation peut à souhait être remplacé par une vis ou par tout autre mode alternatif de fixation, y compris un adhésif. Par ailleurs la fixation ici représentée centrale peut être déportée vers un côté de la cavité. Lorsqu'une onde de pression remonte et arrive dans le lamage haut 22 et sous le noyau magnétique 42, elle repousse le noyau vers la position haute PH. Sous l'influence de ce déplacement, la membrane 58 se plaque au fond 54 de la cavité 50 et obture le canal 52. La cavité 50 et tout cet espace haut de la vanne en général étant rempli de fluide incompressible, l'obturation du canal 52 entraîne une brusque augmentation de la pression dans la cavité 50 ce qui empêche alors le noyau 42 de ce déplacer vers le haut.

Un second mode de réalisation est maintenant décrit en référence à la figure 4.

Le canal 52 comprend un clapet anti-retour 62 ainsi formé : le canal 52 comprend un premier tronçon « bas » 64 de faible section et un second tronçon « haut » 66 de section plus importante. Le tronçon bas 64 s'étend vers la cavité 50 à partir de la face inférieure 48 du noyau alors, que le tronçon haut 66 s'étend vers la face inférieure 48 à partir du fond 54 de la cavité 50. L'intersection des tronçons bas 64 et haut 66 forme une section conique définissant un siège de clapet 68. Une bille 70 agencée dans le tronçon haut 66 est libre de s'y déplacer et, telle que présenté sur la figure, la bille 70 s'agence au repos contre le siège de clapet 68 et obture le tronçon bas 64 du canal 52. Un ressort, non représenté, peut être agencé dans le tronçon haut 66 et solliciter en permanence la bille 70 contre le siège 68.

Le fonctionnement est similaire à celui de la membrane 58 du premier mode de réalisation. Lorsqu'une onde de pression remonte et arrive dans le lamage haut 22 et sous le noyau magnétique 42, elle repousse le noyau vers la position haute PH. Sous l'influence de ce déplacement, la bille 70 se plaque contre le siège de clapet 68 et ferme le canal 52 ce qui, pour les mêmes raisons que précédemment empêche le noyau 42 de ce déplacer vers le haut.

Un troisième mode de réalisation est maintenant décrit en référence aux figures 5, 6 et 7.

Au fond 54 de la cavité 50 est agencé un diaphragme élastique 72 de type connu sous la désignation anglaise « Reed valve ». Le diaphragme 72 est formé dans une mince feuille métallique et comprend un disque extérieur 74 duquel s'étendent vers l'intérieur des bras 76. Dans le but d'augmenter la souplesse des bras 76 ceux-ci sont à la fois étroit et relativement long. Ainsi, tel que montré sur les figures 6 et 7, les bras 76 sont courbés s'étendant presque tangentiellement au disque 74 et s'enroulant jusqu'à une extrémité distale circulaire 78 percée en son centre 80. Selon les figures, le disque 74 s'agence à la périphérie du fond 54 de la cavité 50 et, au repos le bras 76 s'étend de sorte que l'extrémité circulaire 78 s'agence sur l'ouverture du canal 52 et l'obstrue partiellement compte tenu du trou central 80.

Jusqu'à présent la description a présenté un noyau magnétique 42 pourvu d'un seul canal 52 joignant la face inférieure 48 au fond 54 de la cavité 50. Quel que soit le mode de réalisation choisi, membrane élastique 58, clapet anti-retour 62 ou diaphragme Reed 72, le noyau peut être pourvu de plusieurs canaux 52 et l'homme du métier saura adapter sans encombres chacun des modes avec un ou plusieurs canaux 52. Ainsi le diaphragme 72 représenté est à l'évidence prévu pour obturer plusieurs canaux 52, six sur la figure.

Le fonctionnement du diaphragme 72 est maintenant expliqué. Lorsqu'une onde de pression remonte et arrive dans le lamage haut 22 et sous le noyau magnétique 42, elle repousse le noyau vers la position haute PH. Sous l'influence de ce déplacement, l'extrémité circulaire 78 se replace contre l'arrivée du canal 52 obture le canal 52 ce qui, pour les mêmes raisons que précédemment, empêche le noyau 42 de ce déplacer vers le haut.

Dans l'alternative présentée, l'extrémité circulaire 78 est pourvue d'un petit trou central 80 de sorte que le canal 52 n'est jamais totalement obstrué et un mince flux de fluide peut toujours circuler par le canal 52. Dans ce cas l'effet de l'onde de pression est amoindri et le déplacement du noyau amorti.

Les références suivantes ont été utilisées dans la description.
- 10: système d'injection
- 12: rampe commune
- 14: électrovanne
- 16: corps de l'électrovanne
- 18: alésage
- 20: lamage bas
- 22: lamage haut
- 24: aiguille
- 26: pointe de l'aiguille
- 28: tête de l'aiguille
- 30: gorge en hélice
- 32: siège de vanne
- 34: orifice de sortie
- 36: canal de retour
- 38: électroaimant
- 40: bobine
- 42: noyau magnétique
- 44: logement du noyau
- 46: face supérieure du noyau
- 48: face inférieure du noyau
- 50: cavité dans le noyau
- 52: canal
- 54: fond de la cavité
- 56: ressort
- 58: membrane élastique
- 60: pion de fixation
- 62: clapet anti-retour
- 64: partie basse du canal
- 66: partie haute du canal
- 68: siège de clapet
- 70: bille
- 72: diaphragme élastique type REED
- 74: disque extérieur
- 76: bras
- 78: extrémité circulaire
- 80: trou central

- A: axe principal
- PF: position fermée
- PO: position ouverte
- PB: position basse du noyau
- PH: position haute du noyau

## Revendications

1. Electrovanne (14) prévue pour réguler la pression dans un système d'injection (10) de carburant sous pression, l'électrovanne (14) comprenant un corps (16) dans lequel est agencé une aiguille (24), coulissante entre une position fermée (PF) et un position ouverte (PO), l'aiguille (24) étant sollicitée par un électroaimant (38) comprenant une bobine (40) solidaire du corps et un noyau magnétique (42) axialement mobile entre une première position (PB) dans laquelle il sollicite l'aiguille (24) en position fermée (PF) et, une seconde position (PH) dans laquelle l'aiguille (24) est libre de se déplacer en position ouverte (PO), le noyau (42) étant pourvu d'une cavité (50) en communication de fluide, via un canal interne (52), avec un lamage du corps (22) dans lequel émerge l'aiguille (24) et dans lequel, en utilisation, arrive du carburant, **caractérisé en ce que**
le noyau (42) est de plus pourvu d'un moyen de restriction (58, 62, 72) de ladite communication de fluide adapté à amortir, en utilisation, des ondes de pressions se propageant dans le carburant et à empêcher lesdites ondes de déplacer le noyau (50) et,
dans laquelle le moyen de restriction (58, 62, 72) est un dispositif agencé de sorte à naturellement obturer la communication (52) de fluide, ledit dispositif fermant en utilisation ladite communication lorsqu'une onde de pression se propageant dans le carburant tente de déplacer le noyau (42) vers la seconde position (PH).

2. Electrovanne (14) selon la revendication 1 dans laquelle le dispositif est un clapet anti-retour (62) comprenant une bille (70) placée dans le canal (50) et un siège de clapet (68) contre lequel la bille (70) peut se placer et ainsi obturer le canal.

3. Electrovanne (14) selon la revendication 1 dans laquelle le dispositif comprend un membre élastique (58) qui, en utilisation, obture le canal (52) lorsque le noyau (50) est poussé par une onde de pression vers la seconde position (PH), empêchant ainsi ledit déplacement et, l'ouvrant en ployant sous l'influence du déplacement du noyau (50) vers la première position (PB).

4. Electrovanne (14) selon la revendication 3 dans laquelle le membre élastique (58) est une membrane fixée au fond (54) de la cavité.

5. Electrovanne (14) selon la revendication 3 dans laquelle le membre élastique (58) est un diaphragme (72) comprenant des bras souples (76) dont une extrémité est fixée au fond (54) de la cavité et l'autre extrémité mobile se place sur la sortie du canal.

6. Electrovanne (14) selon la revendication 5 dans laquelle l'extrémité mobile (78) du diaphragme (72) n'obstrue que partiellement le canal (52), de sorte que du carburant retenu dans la cavité (50) peut en sortir via un mince flux de carburant.

## Patentansprüche

1. Magnetventil (14) zum Regeln des Drucks in einem Einspritzsystem (10) zum Einspritzen von Kraftstoff unter Druck, wobei das Magnetventil (14) einen Ventilkörper (16) enthält, in welchem eine Ventilnadel (24) angeordnet ist, die zwischen einer geschlossenen Stellung (PF) und einer geöffneten Stellung (PO) verschiebbar ist, wobei die Ventilnadel (24) von einem Elektromagneten (38) beaufschlagt wird, der eine fest mit dem Ventilkörper verbundene Spule (40) und einen Magnetkern (42) aufweist, der axial zwischen einer ersten Stellung (PB), in welcher er die Ventilnadel (24) in die geschlossene Stellung (PF) beaufschlagt, und einer zweiten Stellung (PH) axial verstellbar ist, in welcher die Ventilnadel (24) sich frei in die geöffnete Stellung (PO) verlagern kann, wobei der Kern (42) mit einer Vertiefung (50) versehen ist, die über einen inneren Kanal (52) in Strömungsverbindung mit einer Senkung des Ventilkörpers (22) steht, in welche die Ventilnadel (24) hineinragt und in welche bei Gebrauch Kraftstoff gelangt, **dadurch gekennzeichnet, dass**
der Kern (42) ferner mit einer Einschränkungseinrichtung (58, 62, 72) zum Einschränken der Strömungsverbindung versehen ist, die dazu geeignet ist, bei Gebrauch Druckwellen zu dämpfen, die sich in dem Kraftstoff ausbreiten, und die genannten Wellen daran zu hindern, den Kern (50) zu verlagern,
wobei die Einschränkungseinrichtung (58, 62, 72) eine Vorrichtung ist, die so angeordnet ist, dass sie die Strömungsverbindung (52) in natürlicher Weise absperrt, wobei die Vorrichtung bei Gebrauch die Verbindung dann unterbricht, wenn eine sich in dem Kraftstoff ausbreitende Druckwelle dazu geneigt ist, den Kern (42) in die zweite Stellung (PH) zu verlagern.

2. Magnetventil (14) nach Anspruch 1, wobei die Vorrichtung ein Rückschlagventil (62) ist, das eine in dem Kanal (50) positionierte Kugel (70) und einen Ventilsitz (68) aufweist, an welchen die Kugel (70) sich positionieren und damit den Kanal versperren kann.

3. Magnetventil (14) nach Anspruch 1, wobei die Vorrichtung ein elastisches Glied (58) aufweist, das bei Gebrauch den Kanal (52) dann versperrt, wenn der Kern (50) von einer Druckwelle in die zweite Stellung (PH) gedrückt wird, wodurch es somit die Verlagerung verhindert, und ihn öffnet, indem es sich unter der Wirkung der Verlagerung des Kerns (50) in die erste Stellung (PB) umbiegt.

4. Magnetventil (14) nach Anspruch 3, wobei das elastische Glied (58) eine am Grund (54) der Vertiefung befestigte Membran ist.

5. Magnetventil (14) nach Anspruch 3, wobei das elastische Element (58) eine Blende (72) mit nachgiebigen Armen (76) ist, wovon ein Ende am Grund (54) der Vertiefung befestigt ist und das andere, bewegliche Ende sich an den Auslass des Kanals positioniert.

6. Magnetventil (14) nach Anspruch 5, wobei das bewegliche Ende (78) der Blende (72) den Kanal (52) nur teilweise verschließt, so dass in der Vertiefung (50) zurückgehaltener Kraftstoff über einen dünnen Kraftstofffluss daraus austreten kann.

## Claims

1. Solenoid valve (14) designed to regulate the pressure in a pressurized fuel injection system (10), the solenoid valve (14) comprising a body (16) containing a needle (24) that can slide between a closed position (PF) and an open position (PO), the needle (24) being pressed by an electromagnet (38) including a coil (40) rigidly connected to the body and a magnetic core (42) that is movable axially between a first position (PB) in which the magnetic core (42) presses the needle (24) into the closed position (PF) and a second position (PH) in which the needle (24) is free to move to the open position (PO), the core (42) having a cavity (50) that is in fluid communication via an internal channel (52) with a counterbore in the body (22) into which the needle (24) protrudes and into which fuel flows during use, **characterized in that**
the core (42) also has means (58, 62, 72) for restricting said fluid communication that are designed, during use, to attenuate pressure waves propagating in the fuel and to prevent said waves from moving the core (42), and
wherein the restriction means (58, 62, 72) are a device designed to naturally block the fluid communication (52), said device closing set communication when in use if a pressure wave propagating in the fuel attempts to move the core (42) to the second position (PH).

2. Solenoid valve (14) according to Claim 1, **characterized in that** the device is a check valve (62) including a ball (70) placed in the channel (52) and a valve seat (68) against which the ball (70) can be positioned to block the channel.

3. Solenoid valve (14) according to Claim 1, **characterized in that** the device includes an elastic member (58) that, when in use, blocks the channel (52) if the core (42) is pushed by a pressure wave towards the second position (PH), thereby preventing said movement and opening same by bending under the influence of the movement of the core (42) towards the first position (PB).

4. Solenoid valve (14) according to Claim 3, **characterized in that** the elastic member (58) is a membrane attached to the bottom (54) of the cavity.

5. Solenoid valve (14) according to Claim 3, **characterized in that** the elastic member (58) is a diaphragm (72) including flexible arms (76), one end of which being attached to the bottom (54) of the cavity and the other movable end being positioned at the output of the channel.

6. Solenoid valve (14) according to Claim 5, **characterized in that** the movable end (78) of the diaphragm (72) only partially obstructs the channel (52) so that the fuel retained in the cavity (50) can exit same via a limited fuel flow.
